# EUROPEAN PATENT APPLICATION

(11) **EP 4 321 370 A1**
(43) Date of publication of application: **14.02.2024**
(21) Application number: 23190857.5
(22) Date of filing: 10.08.2023
(51) Int. Cl.: B60L 53/30, B60L 53/35, B60L 53/37

(54) **SYSTEMS AND METHODS FOR ELECTRIC VEHICLE CHARGING USING A FIDUCIAL MARKER**

(30) Priority: 11.08.2022 US 202217885847
(71) Applicant: ABB SCHWEIZ AG, 5400 Baden (CH)
(72) Inventor: HETRICH, Matthew, Cary, NC, 27519 (US)
(74) Representative: Maiwald GmbH

(57) **Abstract**

An electric vehicle (EV) charging system that autonomously charges EV is provided. The method includes: capturing, by a control system and using an image capturing device, one or more first images, wherein the one or more first images indicates a position of an EV charging portal of the EV; maneuvering, by the control system, a robotic arm of the EV charging system based on the one or more first images; projecting, by the control system and using a fiducial marker device, one or more fiducial markers that are offset from the EV charging portal; capturing one or more second images using the image capturing device, wherein the one or more second images indicates a position of the one or more fiducial markers; and maneuvering, by the control system, the robotic arm of the EV charging system based on the one or more second images.

## Description

### FIELD

The present disclosure relates to an automatic electric vehicle-charging system.

### BACKGROUND

Automatic charging of electric vehicles (EVs) is perceived in the EV industry as an important business opportunity because it enables a high degree of safety during charging, which, in turn, enables use of high charging power ratings (fast-charging), improves operational efficiency in charging fleet vehicles or vehicles at a public charge station, and increases customer comfort. Autonomous charging is made possible using mobile robots or robotic arms capable of interacting with the EV charging equipment and EVs.

Typically, an image capturing device may be coupled to a charging plug of the robotic arm, and used for localization of the charging plug as it approaches the EV charging portal. However, as the charging plug approaches the EV charging portal, the charging plug may obstruct the view of the EV inlet, and the image capturing device may be unable to capture any images of the EV inlet. As such, given the obstruction, the maneuvering of the charging plug to the EV charging portal may become open looped (e.g., without output feedback such as images indicating the location of the EV charging portal), which may cause the connection to fail from the final indeterminate and open-loop motion. Accordingly, there remains a technical need to properly maneuver the charging plug when the image capturing device is not capable of capturing an image of the EV inlet.

### SUMMARY

A first aspect of the present disclosure provides a method for a charging system to autonomously charge an electric vehicle (EV). The method comprises: capturing, by a control system and using an image capturing device, one or more first images, wherein the one or more first images indicates a position of an EV charging portal of the EV; maneuvering, by the control system, a robotic arm of the EV charging system based on the one or more first images; projecting, by the control system and using a fiducial marker device, one or more fiducial markers that are offset from the EV charging portal; capturing one or more second images using the image capturing device, wherein the one or more second images indicates a position of the one or more fiducial markers; and maneuvering, by the control system, the robotic arm of the EV charging system based on the one or more second images.

According to an implementation of the first aspect, the one or more first images further indicates a first position of the one or more fiducial markers, and wherein the method further comprises: directing, by the control system, the fiducial marker device to re-position the one or more fiducial markers from the first position to a second position based on the one or more first images, wherein the second position is the position indicated by the one or more second images.

According to an implementation of the first aspect, directing the fiducial marker device to re-position the one or more fiducial markers from the first position to the second position comprises: directing, by the control system, the fiducial marker device to re-position the one or more fiducial markers from the first position to one or more intermediate positions based on the one or more first images; and directing, by the control system, the fiducial marker device to re-position the one or more fiducial markers from the one or more intermediate positions to the second position based on the one or more first images.

According to an implementation of the first aspect, the method further comprises: determining that the one or more fiducial markers is at the second position, and wherein maneuvering the robotic arm of the EV charging system based on the one or more second images is further based on determining that the one or more fiducial markers is at the second position.

According to an implementation of the first aspect, wherein projecting the one or more fiducial markers comprises: projecting a first fiducial marker prior to determining that the one or more fiducial markers is at the second position; and projecting a second fiducial marker based on determining that the one or more fiducial markers is at the second position, wherein the first fiducial marker is different from the second fiducial marker.

According to an implementation of the first aspect, wherein at least one of the one or more second images comprises pixels indicating at least part of the EV charging portal, and wherein maneuvering the robotic arm of the EV charging system based on the one or more second images comprises maneuvering the robotic arm of the EV charging system based on the position of the one or more fiducial markers indicated by the one or more second images.

According to an implementation of the first aspect, projecting the one or more fiducial markers comprises projecting a 6 degree of freedom (DoF) fiducial marker.

According to an implementation of the first aspect, projecting the one or more fiducial markers comprises projecting a dot at a target position.

According to an implementation of the first aspect, the fiducial marker device comprises a laser coupled with a galvanometer.

According to an implementation of the first aspect, the fiducial marker device comprises a digital micro-mirror device (DMD) or a liquid crystal display projector.

According to an implementation of the first aspect, the fiducial marker device comprises a laser coupled to a plurality of servo motors.

A second aspect of the present disclosure provides an electric vehicle (EV) charging system for use in autonomously charging an EV, comprising: a robotic arm that is controllably extendable and retractable, wherein the robotic arm is adapted to carry a charging plug located at a distal end of the robotic arm, wherein the charging plug is configured to be controllably moveable and insertable into an EV charging portal of the EV; an image capturing device configured to capture one or more images; a fiducial marker device configured to project one or more fiducial markers; and a control system configured to: capture, using the image capturing device, one or more first images, wherein the one or more first images indicates a position of the EV charging portal of the EV; maneuver the robotic arm of the EV charging system based on the one or more first images; project, using the fiducial marker device, the one or more fiducial markers that are offset from the EV charging portal; capture one or more second images using the image capturing device, wherein the one or more second images indicates a position of the one or more fiducial markers; and maneuver the robotic arm of the EV charging system based on the one or more second images.

According to an implementation of the second aspect, the one or more first images further indicates a first position of the one or more fiducial markers, and wherein the control system is further configured to: direct the fiducial marker device to re-position the one or more fiducial markers from the first position to a second position based on the one or more first images, wherein the second position is the position indicated by the one or more second images.

According to an implementation of the second aspect, directing the fiducial marker device to re-position the one or more fiducial markers from the first position to the second position comprises: directing the fiducial marker device to re-position the one or more fiducial markers from the first position to one or more intermediate positions based on the one or more first images; and directing the fiducial marker device to re-position the one or more fiducial markers from the one or more intermediate positions to the second position based on the one or more first images.

According to an implementation of the second aspect, the control system is further configured to: determine that the one or more fiducial markers is at the second position, and wherein maneuvering the robotic arm of the EV charging system based on the one or more second images is further based on determining that the one or more fiducial markers is at the second position.

According to an implementation of the second aspect, projecting the one or more fiducial markers comprises: projecting a first fiducial marker prior to determining that the one or more fiducial markers is at the second position; and projecting a second fiducial marker based on determining that the one or more fiducial markers is at the second position, wherein the first fiducial marker is different from the second fiducial marker.

According to an implementation of the second aspect, at least one of the one or more second images comprises pixels indicating at least part of the EV charging portal, and wherein maneuvering the robotic arm of the EV charging system based on the one or more second images comprises maneuvering the robotic arm of the EV charging system based on the position of the one or more fiducial markers indicated by the one or more second images.

According to an implementation of the second aspect, projecting the one or more fiducial markers comprises projecting a 6 degree of freedom (DoF) fiducial marker.

According to an implementation of the second aspect, projecting the one or more fiducial markers comprises projecting a dot at a target position.

A third aspect of the present disclosure provides a non-transitory computer-readable medium having processor-executable instructions stored thereon. The processor-executable instructions, when executed by one or more controllers, facilitate: capturing, using an image capturing device, one or more first images, wherein the one or more first images indicates a position of an EV charging portal of the EV; maneuvering a robotic arm of the EV charging system based on the one or more first images; projecting, using a fiducial marker device, one or more fiducial markers that are offset from the EV charging portal; capturing one or more second images using the image capturing device, wherein the one or more second images indicates a position of the one or more fiducial markers; and maneuvering the robotic arm of the EV charging system based on the one or more second images.

### BRIEF DESCRIPTION OF THE DRAWINGS

Embodiments of the present disclosure will be described in even greater detail below based on the exemplary figures. The present disclosure is not limited to the exemplary embodiments. All features described and/or illustrated herein can be used alone or combined in different combinations in embodiments of the present disclosure. The features and advantages of various embodiments of the present disclosure will become apparent by reading the following detailed description with reference to the attached drawings which illustrate the following:
FIG. 1 illustrates a simplified block diagram depicting an environment for using fiducial markers to maneuver a charging plug towards an electrical vehicle (EV) charging portal according to one or more examples of the present disclosure;
FIG. 2 illustrates a simplified block diagram depicting EV charging environment according to one or more examples of the present disclosure;
FIG. 3A illustrates an exemplary EV charging environment with an EV charging system in a collapsed, docked state according to one or more examples of the present disclosure;
FIG. 3B illustrates the exemplary EV charging environment of FIG. 3A with the EV charging system in a charging state;
FIG. 4 is a schematic illustration of an exemplary control system according to one or more examples of the present disclosure;
FIG. 5 illustrates a process for operating an EV charging system to charge an EV according to one or more examples of the present disclosure;
FIG. 6 depicts an exemplary configuration of the EV charging portal according to one or more examples the present disclosure;
FIG. 7 depicts an exemplary image capturing device coupled to a charging plug according to one or more examples the present disclosure;
FIGs. 8A and 8B depict exemplary images captured by the image capturing device according to one or more examples of the present disclosure;
FIG. 9 depicts an exemplary fiducial marker according to one or more examples of the present disclosure; and
FIG. 10 depicts an image captured by the image capturing device showing a fiducial marker according to one or more examples of the present disclosure.

### DETAILED DESCRIPTION

The present disclosure describes an automatic electric vehicle (EV) charging system and environment, which provides advantages over the state of the art. In particular, the present disclosure relates to the field of autonomous localization and autonomous electric vehicle charging. For example, the present disclosure enables a hands-free, autonomous electrical connection of an electric charger to an EV by using one or more fiduciary markers. In some instances, the present disclosure uses a machine learning architecture or algorithm such as a convolutional neural network (CNN) to reduce the computing overhead while simultaneously increasing invariance of the overall system (e.g., the EV charging system).

To enable hands-free, autonomous electrical connection of an electric charger to an EV, it may be necessary for the EV charging system to be able to automatically determine the precise location of the charging receptacle on the EV. The autonomous electrical connection may be able to automatically determine the precise location of the charging receptacle on the EV and may be optimized for minimal processing overhead to function on an embedded platform, to be cost effective, and to maximize invariance (e.g., the system reading may remain unchanged regardless of scale, rotation, lighting, noise, and so on). The EV charging system may use a vision system and/or perception system (e.g., via an image capturing device) to achieve this.

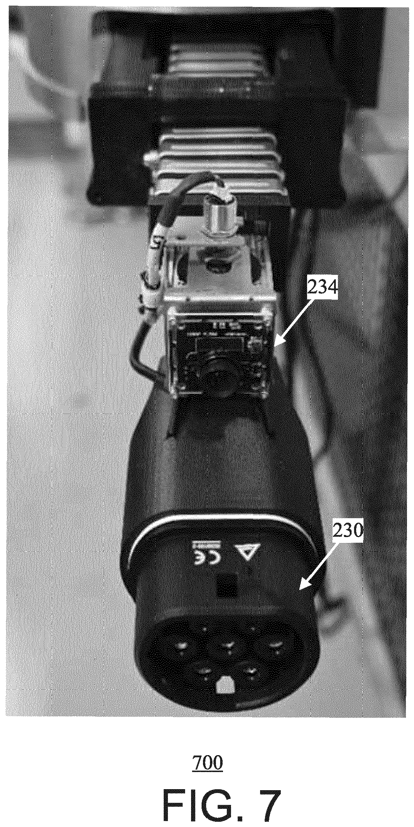

In some instances, the robotic arm of the EV charging system and the positioning of the robotic arm may be indeterminate (e.g., neither accurate nor precise as well as not determined) and/or compliant (e.g., due to inexpensive components). This may be necessary so as to build a significantly higher volume and lower cost of robots when compared to the traditional industrial robots that can be typically used for the task. As such, by rigidly coupling an image capturing device to the charging plug of the robotic arm (shown in FIG. 7 below), the indeterminate nature of an inexpensive robot may be avoided. In other words, as the robot localizes the charging plug relative to the EV charging portal (e.g., the EV receptacle), the receptacle's detail within the fixed resolution of the fixed resolution image capturing device increases, due to the decreasing distance to the EV and the EV charging portal. This has the added benefit of reducing the necessary cost of the camera (e.g., a lower resolution image capturing device can be used to charge the EV).

However, once the image capturing device has localized itself near the charging portal, and due to the coupling of the image capturing device to the charging plug, the robotic arm may move the charging plug to approximately the image capturing device's location (e.g., by moving the offset of the camera and any angle difference due to the separate radii). This action of maneuvering the robotic arm to the charging portal is open looped (e.g., the control action from the controller is independent of the process output) due to the plug obstructing the view of the EV charging portal, and/or followed by the EV charging portal being out of the image capturing device's view entirely. This may cause the connection to fail from the final indeterminate and open-looped motion.

As such, aspects of the present disclosure address the open loop nature by projecting an ephemeral (e.g., temporary) fiducial marker at a corresponding offset where the image capturing device may end up when the charging plug is being inserted into the charging portal. This fiduciary marker may be used to maneuver the EV charging plug to the EV charging portal when the plug is obstructing the view of the EV charging portal such that the EV charging portal is out of the image capturing device's view.

In particular, exemplary aspects of the charging systems, charging devices, and/or back-end servers according to the present disclosure, are further elucidated below in connection with exemplary embodiments, as depicted in the figures. The exemplary embodiments illustrate some implementations of the present disclosure and are not intended to limit the scope of the present disclosure.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

Where possible, any terms expressed in the singular form herein are meant to also include the plural form and vice versa, unless explicitly stated otherwise. Also, as used herein, the term "a" and/or "an" shall mean "one or more" even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on".

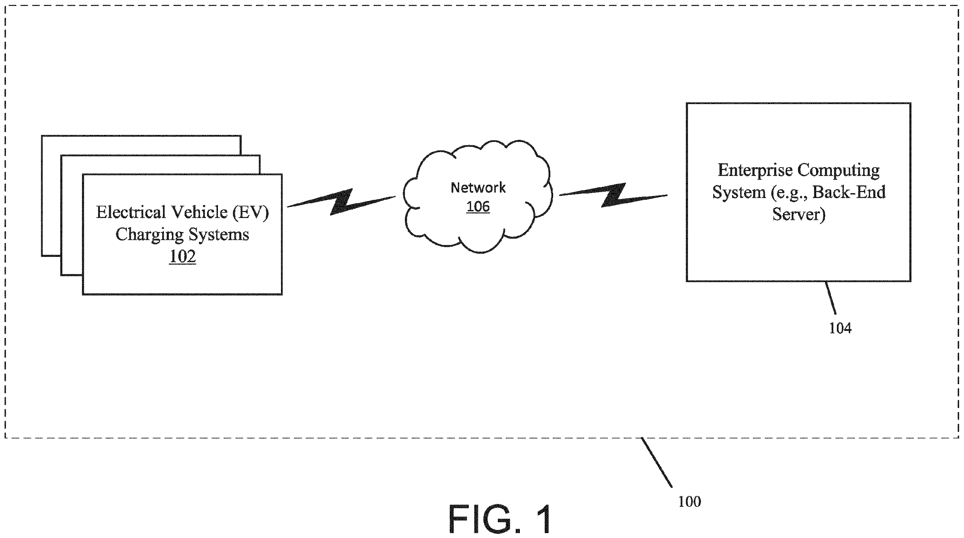

FIG. 1 illustrates a simplified block diagram depicting an environment 100 for using fiducial markers to maneuver a charging plug towards an electrical vehicle (EV) charging portal according to one or more examples of the present disclosure.

Referring to FIG. 1, the environment 100 includes one or more EV charging systems 102, an enterprise computing system 104 (e.g., a back-end server), and a network 106. Although the entities within environment 100 may be described below and/or depicted in the FIGs. as being singular entities, it will be appreciated that the entities and functionalities discussed herein may be implemented by and/or include one or more entities.

The entities within the environment 100 such as the EV charging systems 102 and the enterprise computing system 104 may be in communication with other systems within the environment 100 via the network 106. The network 106 may be a global area network (GAN) such as the Internet, a wide area network (WAN), a local area network (LAN), or any other type of network or combination of networks. The network 106 may provide a wireline, wireless, or a combination of wireline and wireless communication between the entities within the environment 100. Additionally, and/or alternatively, the EV charging systems 102 and the enterprise computing system 104 may be in communication with each other without using the network 106. For instance, the EV charging systems 102 may use one or more communication protocols such as WI-FI or BLUETOOTH to communicate with directly with the enterprise computing system 104.

The enterprise computing system 104 is a computing system that is associated with the enterprise organization. In some instances, the enterprise computing system 104 is a back-end server for the enterprise organization. The enterprise organization may be any type of corporation, company, organization, institution, or the like that is formed to pursue entrepreneurial endeavors such as by selling goods and/or by providing services.

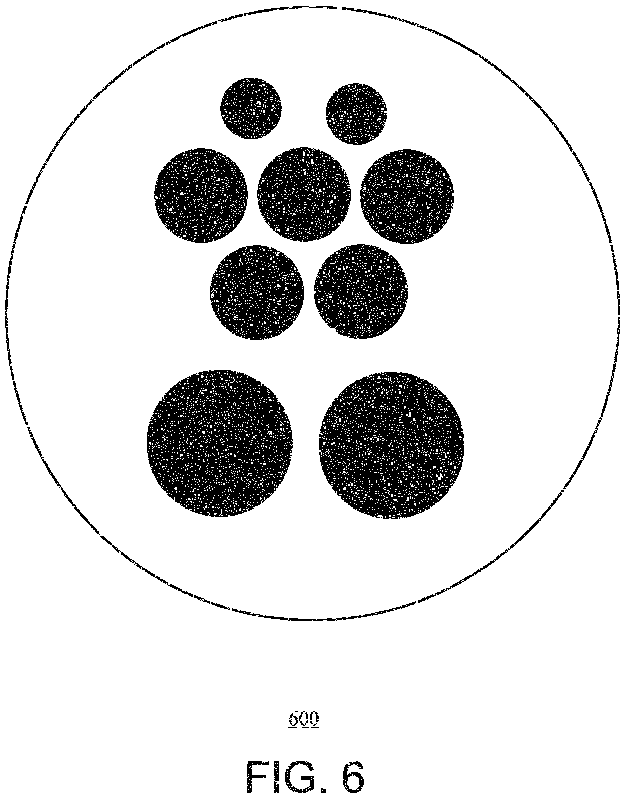

The enterprise computing system 104 includes one or more computing devices, computing platforms, systems, servers, and/or other apparatuses capable of performing tasks, functions, and/or other actions for the enterprise organization. For example, in some instances, the enterprise computing system 104 includes a machine learning (ML) / artificial intelligence (AI) training system that trains ML and/or AI models, datasets, and/or algorithms (e.g., neural networks (NN) and/or convolutional neural networks (CNNs)). The ML / AI model may be used by the EV charging systems 102 to charge an EV. For example, an EV charging portal such a Combined Charging System Type 1 or 2 (CCS 1 or CCS 2) charging portal may have a particular geometry (e.g., as shown in FIG. 6, which will be described in further detail below). The enterprise computing system 104 may train a ML / AI model, and the ML / AI Model may be used to maneuver the EV charging plug to the EV charging portal.

In some variations, the enterprise computing system 104 may be implemented using one or more computing platforms, devices, servers, and/or apparatuses. In other variations, the enterprise computing system 104 may be implemented as engines, software functions, and/or applications. In other words, the functionalities of the enterprise computing system 104 may be implemented as software instructions stored in storage (e.g., memory) and executed by one or more processors.

The EV charging systems 102 include one or more charging systems that are configured to charge EVs. For example, the EV charging systems 102 may include an image capturing device (e.g., a camera) that is configured to capture images of the EV charging portal of the EV.

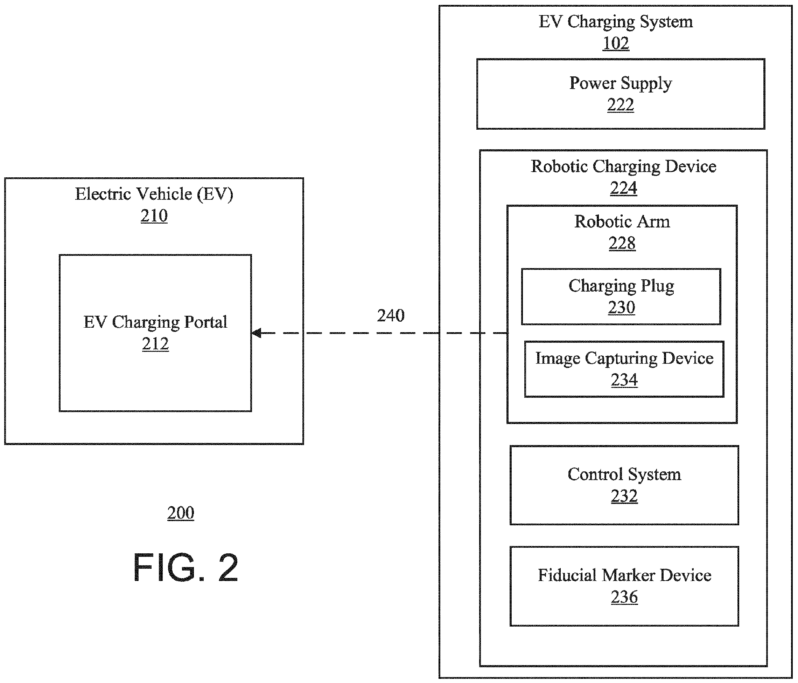

In some instances, the EV charging systems 102 may obtain a trained ML model (e.g., trained CNN) from the enterprise computing system 104 and input the captured images into the trained ML model to determine one or more regions of interest. The EV charging systems 102 may further use one or more image processing algorithms or techniques (e.g., scale-invariant feature transform (SIFT) technique) on the determined regions of interest to determine a location of the EV charging portal of the EV. Then, the EV charging system 102 may move a charging plug to the determined location to charge the EV. FIG. 2 will describe an exemplary EV charging system 102 in further detail.

It will be appreciated that the exemplary environment depicted in FIG. 1 is merely an example, and that the principles discussed herein may also be applicable to other environments.

FIG. 2 illustrates a simplified block diagram depicting EV charging environment 200 according to one or more examples of the present disclosure.

Referring to FIG. 2, the EV charging environment 200 includes an electric vehicle (EV) 210 and an electric vehicle (EV) charging system 102. Among other components, systems, and/or entities such as an engine and/or transmission, which are not shown, the EV 210 includes an EV charging portal 212 such as an EV inlet. In some instances, the EV charging portal 212 may be CCS 1 or CCS 2.

The EV charging system 102 (e.g., plug / charging plug connection system) includes an automated-robotic charging device 224 and a power supply 222. The robotic charging device 224 includes a robotic arm 228, a control system 232, and a fiducial marker device 236. The robotic arm 228 is adapted to engage and carry a charging plug 230 and/or an image capturing device 234. In some instances, the charging plug 230 may be integrated with the robotic arm 228, while in other instances, the robotic arm 228 may be separate from, but engageable to carry, the charging plug 230. The image capturing device 234 is configured to capture images of the EV charging portal 212. In some instances, the image capturing device 234 may include a light emitter that is configured to emit light onto the EV charging portal 212 when the image capturing device 234 captures an image of the EV charging portal 212. In some instances, the image capturing device 234 may be located on and/or positioned on the robotic arm 228 such as at an end of the robotic arm 228. This is shown and described in FIG. 7 below.

The power supply 222 may be an EV charging unit (EVCU), which supplies high voltage for charging. The power supply 222 may be usable with or without the robotic charging device 224. The EV charging system 102 is configured to automatically and/or conveniently charge the EV 210, without human intervention or interaction, thus, providing a safe and convenient charging experience for the user or operator of the EV 210.

The power supply 222 receives AC power (e.g., from a utility power supply), and converts and conditions the main supply to a power suitable for charging an EV 210 (e.g., a DC voltage with a sufficient current rating for rapid charging of EVs). The power supply 222 is electrically coupled to the robotic charging device 224 to provide charging power to the charging device 224. The robotic charging device 224 may then supply the charging power to the EV 210, in an automated and operator-free manner. A control system 232 of the charging device 224 may communicate with the power supply 222 (e.g., to provide loose or tight control of the charging).

The EV charging system 102 and in particular, the control system 232 may detect when an EV 210 is within a predetermined proximity to the robotic charging device 224 and determine a physical position of the EV charging portal 212 on the EV 210. Based on the control system 232 determining the EV 210 and its EV charging portal 212 are within reach of the robotic charging device 224, the control system 232 uses the images captured by the image capturing device 234 to maneuver (e.g., guide, orient, move, displace, and/or actuate) the robotic arm 228 and position its charging plug 230 to be in close proximity to the charging portal 212. In some examples, as shown in FIG. 2, the charging plug 230 and the image capturing device 234 may be integrated or otherwise operably included in the end effector of the robotic arm 228. In other examples, the image capturing device 234 and/or the light emitter 422 may be disposed at another location on or around the EV charging system 102, for example, at its base. The robotic charging device 224 then configures the charging plug 230 to be inserted into the EV charging portal 212, and charges the EV 210. The dotted line 240 represents the extension of the robotic arm 228 to the EV charging portal 212 of the EV 210. Once the charging is completed (or is otherwise stopped), the robotic charging device 224 removes the charging plug 230 from the EV charging portal 212, and retracts the robotic arm 228.

In some instances, the control system 232 maneuvers the robotic arm 228 by changing the physical position and/or orientation of the charging plug 230 of the robotic arm 228 such that it becomes aligned for insertion into the EV charging portal 212 of the EV 210. For instance, the control system 232 may first move the robotic arm 228 to be within a close proximity of the EV charging portal 212 and may then orient the charging plug 230 such that it becomes aligned for insertion into the EV charging portal 212. In other instances, the control system 232 may dynamically move the robotic arm 228 and orient the charging plug 230 in any order (including contemporaneously), providing for a smooth movement and insertion of the charging plug into the charging portal 212.

The control system 232 uses one or more images, or a continuous succession or series of images and/or videos, captured using the image capturing device 234 to maneuver the robotic arm 228 such that it becomes aligned with the EV charging portal 212. For example, the control system 232 captures one or more images that includes the EV charging portal 212. The control system 232 uses the one or more images to maneuver the charging plug 230 to the EV charging portal 212 to charge the EV. In some instances, the control system 232 may use a trained neural network to determine regions of interest and/or points of interest (e.g., keypoints) within the image. The control system 232 uses the determined regions of interest / keypoints to determine a location of the EV charging portal 212. The control system 232 uses the location of the EV charging portal 212 to maneuver the robotic arm 228 and/or the charging plug 230 towards the EV charging portal 212.

Further, the control system 232 uses a fiducial marker device 236 to maneuver the robotic arm 228 to the EV charging portal 212. For example, as mentioned above, at a certain stage during the maneuvering of the robotic arm 228, the image capturing device 234 might not be able to capture image(s) of the EV charging portal 212. For instance, once the charging plug 230 reaches a certain distance away from the EV charging portal 212, the charging plug 230 may obstruct the view of the EV charging portal 212 such that the EV charging portal 212 is out of view of the image capturing device 234 (e.g., at that distance / stage, images captured by the image capturing device 234 might not show the EV charging portal 212 as the charging plug 230 is obstructing the charging portal 212).

As such, the fiducial marker device 236 provides one or more fiducial markers (e.g., an ephemeral or temporary fiducial marker) that is detectable by the image capturing device 234 when the image capturing device 234 is unable to capture an image of the EV charging portal 212 (e.g., due to the obstruction of the EV charging portal 212 by the charging plug 230). For instance, the fiducial marker device 236 may provide the fiducial marker at a corresponding offset such that when the EV charging portal 212 is being obstructed by the charging plug 230, the image capturing device 234 is still able to capture an image of the fiducial marker. The control system 232 may use the fiducial marker to maneuver and configure the charging plug 230 to be inserted into the EV charging portal 212 to charge the EV.

In other words, traditionally, an open looped system is used to maneuver a charging plug into the EV charging portal 212 once an image capturing device is unable to capture an image of the EV charging portal 212 (e.g., because the image capturing device is unable to obtain an image of the EV charging portal, the control system may move the charging plug independently and without feedback from the image capturing device indicating the location of the charging plug compared to the location of the EV charging portal 212). In contrast, aspects of the present disclosure use a closed loop system to maneuver the charging plug 230 to the EV charging portal 212 even if the image capturing device 234 is unable to capture an image of the EV charging portal 212. For instance, initially, the image capturing device 234 may capture one or more images / videos of the EV charging portal 212 and maneuver the charging plug 230 based on the captured images / videos (e.g., a first set of images / videos). At a certain point, the image capturing device 234 may be unable to capture an image / video of the EV charging portal 212 as the charging plug 230 may be obstructing the view of the EV charging portal 212. As such, the control system 232 may direct the fiducial marker device 236 to provide (e.g., display) a fiducial marker that is detectable by the image capturing device 234. The image capturing device 234 may capture images / videos (e.g., a second set of images / videos) indicating the fiducial marker. The control system 232 may use the captured images / videos of the fiducial marker to maneuver the charging plug 230 towards the charging portal 212, and eventually insert the charging plug 230 into the charging portal 212 so as to begin charging the EV 210.

In some instances, the control system 232 may direct the fiducial marker device 236 to project the fiducial marker prior to the image capturing device 234 being unable to capture images / videos of the EV charging portal 212. For instance, the control system 232 may capture one or more images of both the EV charging portal 212 as well as the fiducial marker device 236. Initially, the control system 232 may use the location of the EV charging portal 212 within the image(s) to maneuver the charging plug 230. After determining the fiducial marker is at a target location (e.g., a location that is detectable by the image capturing device 234 when the charging plug 230 is obstructing the EV charging portal 212), the control system 232 may switch to using the fiducial marker for the maneuvering of the charging plug 230.

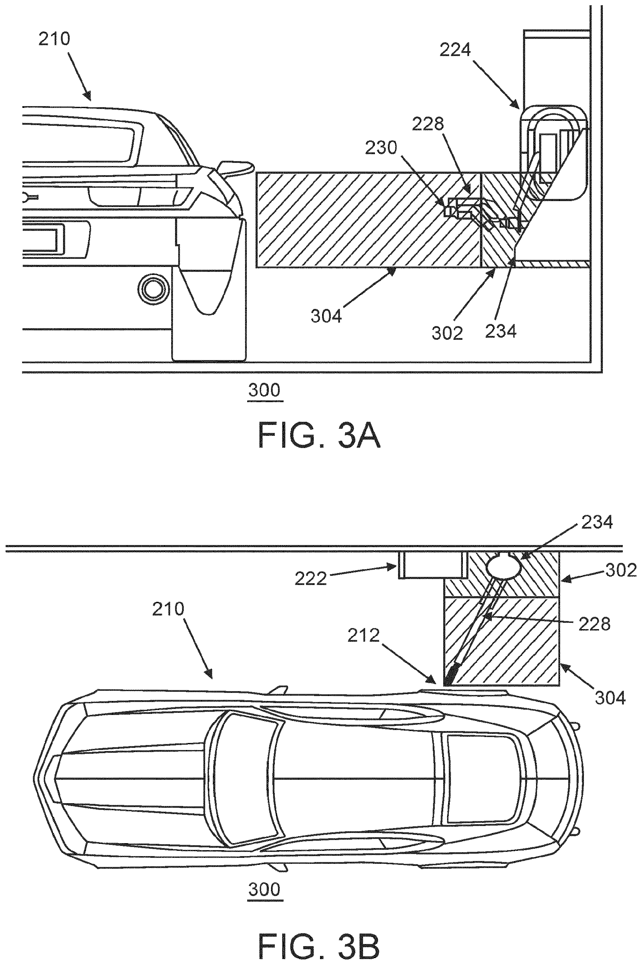

The fiducial marker device 236 may be any type of device that is configured to display a fiducial marker (e.g., an ephemeral or temporary fiducial marker). The fiducial marker device 236 may project the fiducial marker at a corresponding offset where the image capturing device 234 may end up when the charging plug 230 is being inserted into the charging portal 212. In some instances, the fiducial marker may be a 6 Degree of Freedom (DoF) fiducial marker. In other instances, the fiducial marker may be a dot, pattern, and/or other type of marker that is projected at the target position of the image capturing device 234. For example, the fiducial marker may be projected by a laser (of visible, or outside visible light spectrum) coupled with a galvanometer (2 high speed mirrors moving the laser fast enough to project a 2D image such as a projection of figure 3), a DMD (digital micro-mirror device), an liquid crystal display (LCD) projector, or simply a low power laser mounted to two servos (or other actuator in a pan/tilt configuration) allowing the laser output to be projected anywhere on the scene. In other words, the fiducial marker device 236 may be and/or include a laser, a galvanometer, a digital micrometer device, a liquid crystal display (LCD) projector, and/or a laser mounted on two servo motors (or other actuator in a pan/tilt configuration) that are configured to provide the fiducial marker.

It will be appreciated that the exemplary environment depicted in FIG. 2 is merely an example, and that the principles discussed herein may also be applicable to other situations-for example, other types of EV charging systems 102.

FIG. 3A illustrates an exemplary electric vehicle (EV) charging environment 300 with an EV charging system (e.g., EV charging system 102) in a collapsed, docked state according to one or more examples of the present disclosure and FIG. 3B illustrates the exemplary electric vehicle (EV) charging environment 300 of FIG. 3A with the EV charging system in a charging state. However, it will be appreciated that the EV charging environment 300 with the EV charging systems shown in FIGs. 3A and 3B are merely examples of the EV charging environment 200 from FIG. 2 and additional / alternative embodiments of EV charging environments, systems, and/or devices are contemplated within the scope of the present disclosure. For instance, in additional and/or alternative embodiments, the EV charging environment 300 may include a different robotic arm 228 assembly such as a scissor link mechanism for the robotic arm 228, or a different charging arrangement for the EV such as an EV having its charging plug on the undercarriage of the EV.

Referring to FIGs. 3A and 3B, the EV charging environment 300 includes the robotic charging device 224 and the power supply 222. The robotic charging device 224 includes the robotic arm 228 with a charging plug 230. The EV charging environment 300 further includes the EV 210. The EV 210 includes an EV charging portal 212.

Furthermore the EV charging environment 300 includes an image capturing device 234. For instance, the image capturing device 234 may be mounted, physically positioned, operatively coupled to, and/or fastened to a base of the robotic charging device 224. Additionally, and/or alternatively, another image capturing device may be mounted, physically positioned, operatively coupled to, and/or fastened to the robotic arm 228 and in particular, either on or adjacent the charging plug 230, which are both carried by an end-effector of the robotic arm. The locations of the image capturing devices are merely exemplary and in other examples, the image capturing devices are positioned at other locations within the EV charging environment 300 as appropriate to have line-of- sight to the moving charging plug 230 and also the charging port of the EV 210. The image capturing device 234 may be used as visualization and/or localization sensors that form part of the control system 232 for automatically controlling the robotic charging device 224 to maneuver and orient the charging plug 230 into the EV charging portal 212 for charging the EV 210. Additionally, and/or alternatively, in other examples, the EV charging environment 300 includes additional image capturing devices.

The EV charging environment 300 further shows a working volume 304 and a non-working volume 302. The working volume 304 is a physical space in which the robotic charging device 224 may maneuver its robotic arm 228 and engage its charging plug 230 with the EV charging portal 212 of the EV 210 (i.e., a volume of functional access). A non-working volume 302 of the robotic charging device 224 is a physical space near the robotic charging device 224 where the charging device 224 is configured such that it will not attempt to charge an EV 210 that is within that space. The non-working volume 302 may include spaces where the robotic charging device 224 is incapable of effectively plugging in its charging plug 230 into the EV charging portal 212, whether because of a mechanical collision or inability to obtain a proper orientation, and/or a buffer space to provide a safe walking distance for human occupants. Accordingly, the robotic charging device 224 might not attempt to move or otherwise engage with the EV 210 when the EV 210 is within the non-working volume 302.

The working volume 304 is defined by the mechanical and kinematic abilities of the robotic charging device 224 and the arrangement of the EV charging system 220 in its installation space. The working volume 304 of the robotic charging device 224 is, therefore, defined (at least in part) by the range of motion it can impart on the robotic arm 228 and the reach of its charging plug 230. In other words, the physical space defined as the working volume 304 in FIGs. 3A and 3B includes locations to which the tip of the robotic arm 228 and, consequently, its end-effector, may reach and locations to which the charging plug 230 may be inserted. The robotic charging device 224 is capable of at least rotating (yaw), pitching, and/or extending/retracting its robotic arm 228. In other words, the kinematics of robotic charging device 224 includes rotational movement and linear movement.

In some instances, the robotic charging device 224 may further controllably orient and move the charging plug 230 independently of the arm 228. This provides an extended range of motion and orientation that enables the charging device 224 to accurately position the charging plug 230 for insertion into the charging portal 212.

In some examples, the robotic arm 228 and the charging plug 230 are separate components and/or devices. For instance, the EV charging system 102 might not include the charging plug 230. In other words, the robotic arm 228 may be configured to control, move, and/or maneuver an existing charging plug 230 within the environment 300 such that it is insertable into the charging portal 212. In some instances, the charging plug 230 is located at the distal end of the robotic arm 228. For instance, the charging plug 230 may be situated at the tip of the robotic arm 228. Additionally, and/or alternatively, the charging plug 230 may be located above and/or below the tip of the robotic arm 228. Additionally, and/or alternatively, the charging plug 230 may be located a certain distance (e.g., several inches) away from the tip of the robotic arm 228.

In some variations, the EV charging system 102 may also include a user feedback/user interface (UI) for communicating with an operator of the EV 210 or otherwise communicating with a user of the EV charging environment 300. For example, the EV charging system 102 may include a UI/perception display. The display may provide information to a user (e.g., localization or charging feedback). For instance, the display may inform the user in real time with respect to the position of the EV 210 and the charging status. With regard to the localization/position feedback, the display may give a signal for the operator on positioning/stopping the EV 210 (similar to what a user may experience at a drive-through car wash). For example, the display may alert the user to move forward, back, or angle right/left. With regard to the charging state, the display may alert the user to a charging status, e.g., charging, charged, percent charge, or remaining charge time. As should be apparent, other user feedback information is contemplated within the scope of this disclosure.

In some variations, the display may be mounted on the charging device 224. The display may, however, alternatively and/or additionally be provided external to the robotic charging device 224. For example, a display may be at a remote mount, which is positioned near the EV 210 (such as a control point for paying for (or interacting with) the EV charging system 102). A projector may also project a projected image conveying user feedback information. The robotic charging device 224 may also wirelessly transmit (e.g., via BLUETOOTH, WI-FI, and so on) the user feedback information to a user device (e.g., a mobile telephone or display of the EV 210).

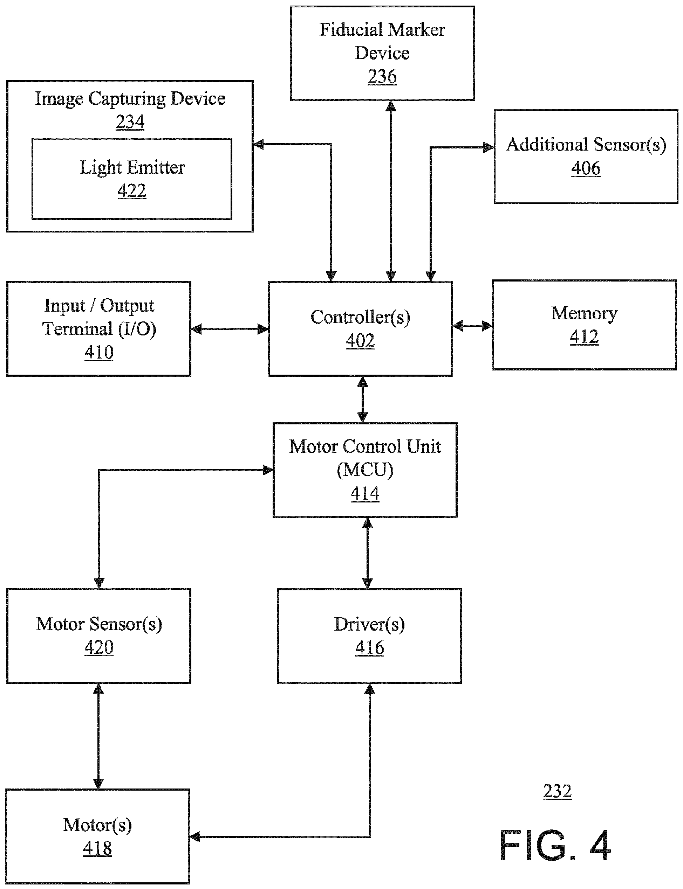

FIG. 4 is a schematic illustration of an exemplary control system according to one or more embodiments of the present disclosure. It will be appreciated that the control system shown in FIG. 4 is merely an example and additional / alternative embodiments of the control system 232 are contemplated within the scope of the present disclosure.

The control system 232 includes a controller 402. The controller 402 is not constrained to any particular hardware, and the controller's configuration may be implemented by any kind of programming (e.g., embedded Linux) or hardware design-or a combination of both. For instance, the controller 402 may be formed by a single processor, such as general purpose processor with the corresponding software implementing the described control operations. On the other hand, the controller 402 may be implemented by a specialized hardware, such as an ASIC (Application-Specific Integrated Circuit), an FPGA (Field-Programmable Gate Array), a DSP (Digital Signal Processor), a GPU (graphics processing unit), an NVIDIA Jetson Device, a hardware accelerator, a processor operating TENSORFLOW, TENSORFLOW LITE, PYTORCH, and/or other ML software, and/or other devices. In some instances, the control system 232 and/or the controller 402 may be an edge computing hardware that is on and/or included within the robotic charging device 224.

The controller 402 is in electrical communication with memory 412. The memory 412 may be and/or include a computer-usable or computer-readable medium such as, but not limited to, an electronic, magnetic, optical, electromagnetic, infrared, or semiconductor computer-readable medium. More specific examples (e.g., a non-exhaustive list) of the computer-readable medium may include the following: an electrical connection having one or more wires; a tangible medium such as a portable computer diskette, a hard disk, a time-dependent access memory (RAM), a ROM, an erasable programmable read-only memory (EPROM or Flash memory), a compact disc read-only memory (CD _ROM), or other tangible optical or magnetic storage device. The memory 412 may store corresponding software such as computer-readable instructions (code, script, etc.). The computer instructions being such that, when executed by the controller 402, cause the controller 402 to control the control system 232 to provide for the operation of the EV charging system 102 as described herein.

The controller 402 is configured to provide and/or obtain information such as the one or more images from the image capturing device 234. For instance, the image capturing device 234 may capture one or more images, or a continuous succession of images, that include the EV charging portal 212 and/or the fiducial marker, and may provide the images to the controller 402. The controller 402 may use these images (alone or in combination with other elements of the control system 232) to determine the physical location, orientation, and/or status of the charging plug 230, the robotic arm 228, the EV 210, and/or the EV charging portal 212. For example, the controller 402 may use these images (e.g., images of the EV charging portal 212 and the fiducial marker) to determine the physical location of the EV charging portal 212 and provide instructions or commands to maneuver the robotic arm 228 such that it is inserted into the EV charging portal 212. The image capturing device 234 may be physically located at the charging device 224 and/or elsewhere in the charging system 102.

In some examples, the image capturing device 234 is a 2-dimensional (2-D) camera or other types of 2-D image capturing devices, for example, a charge-coupled device (CCD), or another type of electronic image acquisition device. In some instances, the image capturing device 234 includes the light emitter 422. For instance, the light emitter 422 may emit light such as a flash or another form of illumination, in a visible or invisible range. In some instances, the light emitted belongs in the infrared (IR) spectrum and/or ultraviolent (UV) spectrum but other types of radiation can be used. The image capturing device 234 may capture the images of the EV charging portal 212 using the light / illumination that results from retro-reflection or reflection of the radiation emitted by the emitter 422.

The fiducial marker device 236 may be in communication with the controller 402. For instance, the fiducial marker device 236 may receive instructions from the controller 402 such as projecting or displaying a fiducial marker. Additionally, and/or alternatively, the controller 402 may provide instructions for the fiducial marker device 236 to change the location of the projected fiducial marker (e.g., from a first position to a second position). The image capturing device 234 may capture an image of the fiducial marker and provide the captured image of the fiducial marker to the controller 402. The controller 402 may use the captured image to maneuver the charging plug 230 such that it is inserted into the EV charging portal 212. The fiducial marker device 236 may be and/or include a laser, a galvanometer, a digital micrometer device, a liquid crystal display (LCD) projector, and/or a laser mounted on two servo motors (or other actuator in a pan/tilt configuration) that are configured to provide the fiducial marker.

Additional sensors 406 may optionally be included within the control system 232. These additional sensors 406 may provide information to the control system 232 in conjunction with (or as a back-up to) information (e.g., images) provided by the image capturing device 234. For example, these additional sensors 406 may include a light sensor and/or flash camera sensor system. In other words, instead of the light emitter being part of the image capturing device 234, the EV charging system 102 may include an additional sensor that provides light / illumination for images captured using the image capturing device 234.

Additionally, and/or alternatively, the additional sensors 406 may optionally include another image capturing device (2D or 3D), a LiDAR sensor, a radio-frequency identification (RFID) sensor, an ultrasonic sensor, a capacitive sensor, an inductive sensor, a magnetic sensor, and/or the like, to refine the trajectory of the robot end-effector as it guides a plug to mate with the vehicle charging port after a visual identification of the location of the vehicle charging port has been made using visual or video information as described herein. In general, any sensor that can provide a signal that enables or enhances the control system's 232 ability to maneuver the charging plug 230 for easy and safe insertion into the charging portal 212 of the EV 210 may be included in the control system 232.

In some variations, the image capturing device 234 and additional sensors 406 form a flash-based photography sensing system. The flash-based photography system includes at least an image capturing device (e.g., device 234) and a light emitter (e.g., used for emitting a flash). In operation, the light emitter 422 cycles the flash, or provides a constant light by keeping the light emitter continuously illuminated and the resulting image is captured by the image capturing device 234.

In some instances, the control system 232 uses a light filter such as a band-pass filter to capture images of the EV charging portal 212. For instance, the light emitter 422 may emit light at a particular light spectrum. The image capturing device 234 and/or the controller 402 may include a band-pass filter that filters out light that is not at the illumination light spectrum. As such, the band-pass filter may be used to filter out other light sources / light such as regular sun-light, garage lights, and/or any other particular inconsistent light sources that flows throughout the day and environment. In other instances, the control system 232 uses another type of light filter such as a temporal filter to capture images of the EV charging portal 212.

The control system 232 is configured to drive motors 418 of the charging device 224. As used herein, motors 418 include AC motors, DC motors, gear-driven motors, linear motors, actuators, or any other electrically controllable device used to effect the kinematics of the charging device. Accordingly, the control system 232 is configured to automatically and continually determine the physical state of the charging system 102 and automatically control the various motors 418 of the charging device 224 to maneuver the robotic arm 228 including the charging plug 230 to be insertable into the charging portal 212 and retract the charging plug 230 after stopping or ceasing the charging of the EV 210.

The control system 232 may further include a motor control unit (MCU) 414 (also referred to herein as a motor controller), e.g., as part of the controller 402 or a separate device. The MCU 414 controls motor drivers 416 using feedback from motor sensors 420 (e.g., encoders) in order to provide real time control of the motors 418. Accordingly, the MCU 414 receives instructions for controlling the motors 418 (e.g., receives motor/actuator control signals from the controller 402), and interprets those instructions, in conjunction with feedback signals from the motor sensors 420, to provide control signals to the motor drivers 416 for accurate and real-time control of the motors 418 (e.g., sends motor/actuator driver signals). The motor drivers 416 transform the control signals, as communicated by the MCU 414, into drive signals for driving the motors 418 (e.g., sends individual operation signals to the motors/actuators). In another embodiment, the MCU 414 is integrated with circuitry to directly control the motors 418.

The MCU 414 may be included as part of the controller 402 or a stand-alone processing system (e.g., a microprocessor). Accordingly, just like the controller 402, the MCU 414 is not constrained to any particular hardware, and the MCU's configuration may be implemented by any kind of programming or hardware design-or a combination of both.

The control system 232 may include an input/output (I/O) terminal 410 for sending and receiving various input and output signals. For example, the control system 232 may send/receive external communication or data to a user, a server (e.g., a billing server and/or the enterprise computing system 104), a power unit, etc. via the I/O terminal 410. The control system 232 may further control the user feedback interface via the I/O terminal 410 (or otherwise).

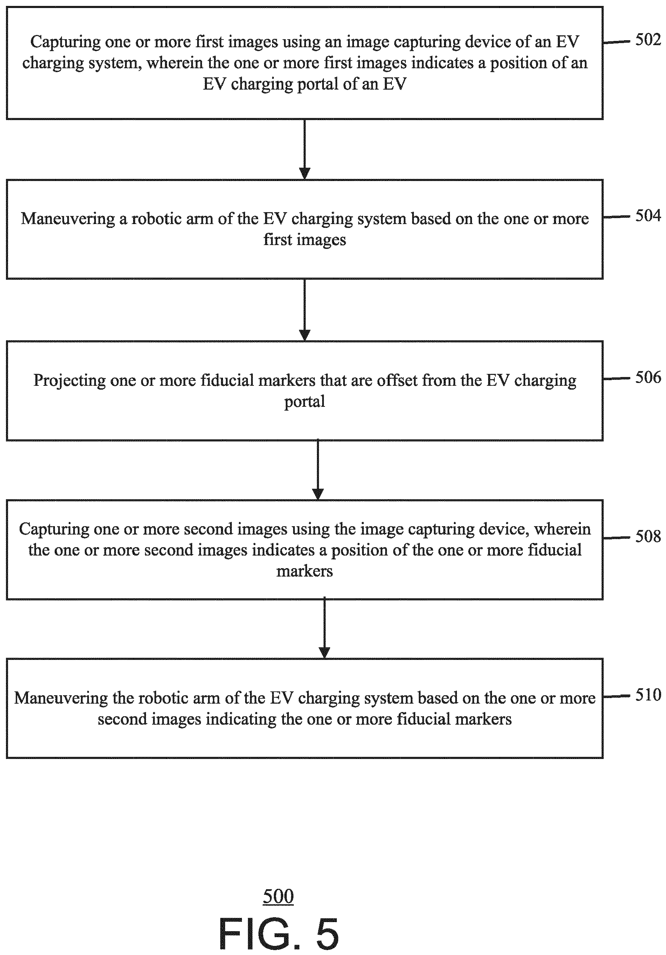

FIG. 5 illustrates a process 500 for operating the EV charging system 102 to charge the EV 210 according to one or more embodiments of the present disclosure. The process 500 may be performed by the control system 232 and in particular, the controller 402 shown in FIG. 4. However, it will be recognized that any of the following blocks may be performed in any suitable order and that the process 500 may be performed in any suitable environment including EV charging environment 100, 200, 300 and/or additional / alternative environments and by any suitable controller or processor.

At block 502, the control system 232 captures one or more first images using an image capturing device (e.g., image capturing device 234) of an EV charging system (e.g., EV charging system 102). The captured image includes a multitude of pixels and the captured image indicates a position (e.g., a location and/or orientation) of the EV charging portal 212 of the EV 210. For example, an operator of the EV 210 may seek to charge their EV 210 using the EV charging system 102. The EV charging system 102 may capture one or more first images of the EV 210 (e.g., the EV charging portal 212) and use the first images to maneuver the robotic arm 228 to the EV charging portal 212.

In some examples, the control system 232 uses a light emitter to capture the image. For example, the light emitter may emit light or illumination (e.g., a flash) that is used by the image capturing device 234 to capture the image. As described above, the image capturing device 234 may include the light emitter 422 and/or the additional sensors 406 may include the light emitter. The control system 232 may provide instructions to the light emitter 422 to provide the light / illumination for capturing the image.

In some variations, the control system 232 and/or the image capturing device 234 may use a light filter (e.g., a band-pass filter and/or a temporal filter) to filter out pixels / portions of the captured image based on the illumination from the light emitter 422. For example, the light emitter 422 may emit light at a certain spectrum and the filter may filter out light other than the light at that spectrum so as to remove other light sources.

In some instances, the control system 232 captures more than one image. For instance, the control system 232 may use the image capturing device 234 to capture multiple images and/or frames of a video. The control system 232 may use the multiple images to identify the physical position of the EV charging portal 212 and maneuver the robotic arm 228 and/or the charging plug 230 accordingly.

At block 504, the control system 232 maneuvers the robotic arm 228 of the EV charging system 102 based on the one or more first images. For example, based on the first images of the EV charging portal 212, the control system 232 may provide information (e.g., one or more signals, instructions, and/or commands) to direct the robotic arm 228 towards the EV charging portal 212 of the EV 210. The control system 232 may use one or more ML / AI models and/or other techniques (e.g., SIFT techniques, floating point techniques, binary techniques, oriented FAST and rotated BRIEF (ORB) techniques, 64-bit floating point techniques, 128-bit floating point techniques, and/or additional techniques) for maneuvering the charging plug 230 towards the EV charging portal 212. For instance, the control system 232 may use one or more image processing techniques to process the captured image of the EV charging portal 212, and maneuver the robotic arm 228 and/or the charging plug 230 based on the captured images. Examples of techniques (e.g., using ML / AI models and/or image processing techniques) that are used to maneuver the robotic arm 228 / the charging plug 230 to the charging portal 212 are described in U.S. Patent Application No. 17/308,184, titled "SYSTEMS AND METHODS FOR ELECTRIC VEHICLE CHARGING USING MACHINE LEARNING," which is incorporated by reference in its entirety herein.

For example, the control system 232 may maneuver (e.g., move / orient) the robotic arm 228 and/or the charging plug 230 to a physical position such as by sending control signals to maneuver the robotic arm 228 / charging plug 230. In other words, the control signals include instructions used to operate the motors 418 to correctly move and position the charging plug 230 to charge the EV 210. More particularly, the control system 232 determines motor control signals, which are configured to (when executed) controllably operate motors 418 to position and orient the arm 228 within the working volume to a position where the charging portal 212 is reachable by the charging plug 230. The control system 232 then sends those motor control signals to execute the specified movements. The motors 418 may include a plurality of motors collectively configured to (ultimately) position the distal end of the charging plug 230 to be in reach of the charging plug 230.

The control system 232 may also determine actuator control signals, which are configured to adjust the orientation and/or the position of the charging plug 230 to align the charging plug 230 with the charging portal 212. The control system 232 then sends those actuator control signals to execute the specified movements. The motors 418 include actuators specifically for fine-tuning the orientation/position of the charging plug 230, and the actuator control signals are directed at controlling such actuators.

The MCU 414 receives the motor/actuator control signals, and may further receive feedback signals. The feedback signals are provided by motor sensors 420 detecting the state/position of the various motors/actuators of the charging device 224. Based on the feedback signals and the motor/actuator signals, the MCU 414 determines motor driver signals and actuator driver signals. As such, the control signals may be high-level instructions for the operation (or resulting position) of the elements of the charging device 224, and the MCU 414 may interpret those high-level instructions (as informed by the feedback signals) to provide lower-level control signals for individually driving the motors/actuators. The MCU 414 sends the motor driver signals and actuator driver signals directly to at least one motor driver 416. In some examples, the MCU 414 includes circuitry capable of operating the appropriate voltage and currents for driving actuators coupled to its processing system (e.g., a microcontroller, FPGA, ASIC, etc.), and therefore, may send the motor driver signals and actuator driver directly to the motors 418.

FIG. 6 depicts an exemplary configuration of the EV charging portal 212 according to one or more examples the present disclosure. For example, the EV charging portal 212 includes certain geometric shapes such as two large circles at the bottom and seven smaller circles at the top. A particular standard, such as CCS 1 or CCS 2, may be defined by these geometric shapes. For instance, FIG. 6 shows a CCS 2 EV charging portal.

FIG. 7 depicts an exemplary image capturing device coupled to a charging plug according to one or more examples the present disclosure. In particular, FIG. 7 shows a setup 700 with the image capturing device 234 positioned on top of the charging plug 230. As such, when the charging plug 230 / the robotic arm 228 are maneuvered towards the EV charging portal 212 by the control system 232, the image capturing device 234 is also moved along with the charging plug 230 / the robotic arm 228. At a certain stage, the image capturing device 234 may no longer be able to capture an image of the EV charging portal 212. For instance, once the charging plug 230 is at a certain distance away from the EV charging portal 212 and given the setup 700, the image capturing device 234 may capture one or more images, and the control system 232 might not be able to detect the EV charging portal 212 within the images. As such, as will be described below, the control system 232 may use one or more fiducial marks from the fiducial marker device 236 to maneuver and insert the charging plug 230 into the EV charging portal 212 based on the control system 232 unable to detect the EV charging portal 212.

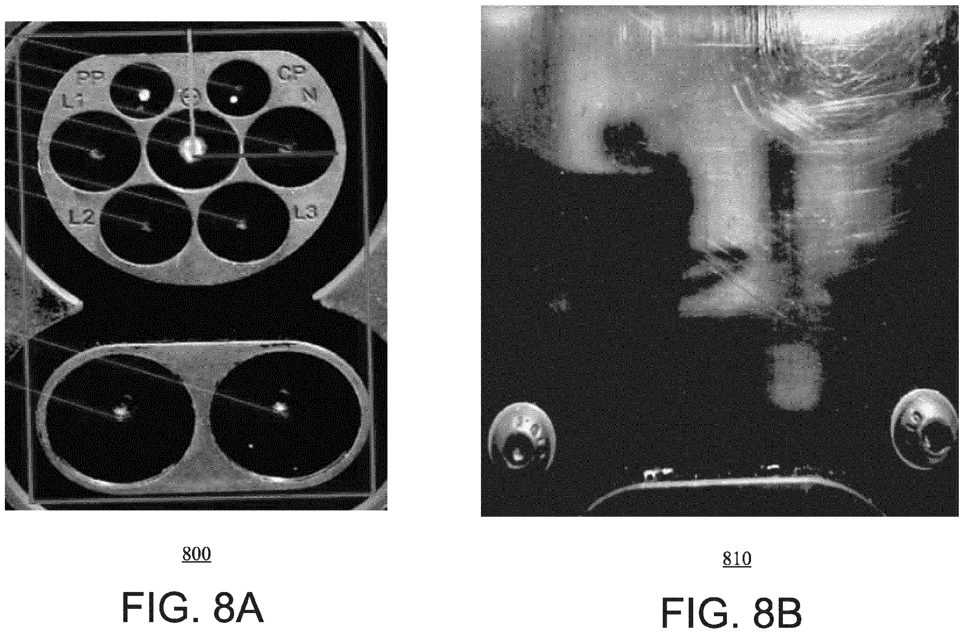

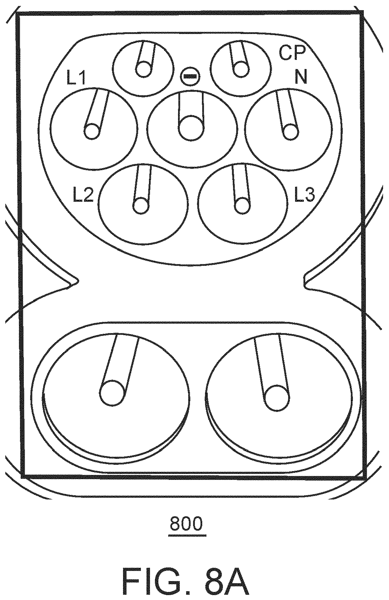

FIGs. 8A and 8B depict exemplary images captured by the image capturing device according to one or more examples of the present disclosure. For instance, referring to FIG. 8A, image 800 shows an image captured by the image capturing device 234 showing the EV charging portal 212 (e.g., the EV charging portal shown in FIG. 6). At a certain stage, the image capturing device 234 is unable to capture an image of the EV charging portal 212. For instance, referring to FIG. 8B, the image capturing device 234 captures an image 810, but the image 810 does not include the EV charging portal 212. Therefore, the control system 232 may use one or more second images of one or more fiducial markers in order to maneuver the robotic arm 228 and/or the charging plug 230.

Referring back to FIG. 5, at block 506, the control system 232 projects one or more fiducial markers that are offset from the EV charging portal 212. For instance, the control system 232 may direct the fiducial marker device 236 to project a fiducial marker onto the EV 210. The fiducial marker may have a corresponding offset from the EV charging portal 212. For instance, referring to setup 700, the fiducial marker may be positioned such that when the image capturing device 234 is unable to capture an image of the EV charging portal 212, the image capturing device 234 is still able to capture an image of the fiducial marker. In other words, the fiducial marker may be projected such that the fiducial marker is slightly above the EV charging portal 212. This offset allows the image capturing device 234 to capture an image of the fiducial marker even though the charging plug 230 is obstructing the EV charging portal 212. In some instances, the fiducial marker is at a corresponding offset where the image capturing device 234 is positioned when the charging plug 230 is being inserted into the EV charging portal 212.

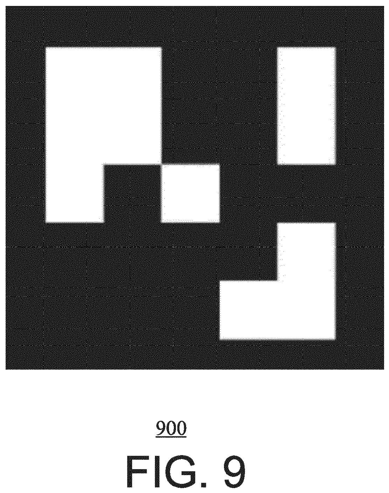

In some examples, the fiducial marker may be a 6 DoF fiducial marker. For instance, FIG. 9 depicts an exemplary fiducial marker 900 according to one or more examples of the present disclosure. The fiducial marker 900 may be a 6 DoF fiducial marker. The control system 232 may direct the fiducial marker device 236 to project the fiducial marker 900 onto the EV 210 (e.g., slightly above the EV charging portal 212 such as a location obtainable by the capturing device 234 when the charging plug 230 is being inserted into the EV charging portal 212).

In some variations, the fiducial marker may be a dot projected at the target position and/or another type of pattern that is projected from the fiducial marker device 236. In some instances, the fiducial marker device 236 may be and/or include a laser that projects a laser output as a fiducial marker. The laser may project a fiducial marker that is within the visible spectrum or outside of the visible light spectrum. The laser may be coupled with a galvanometer (e.g., two high speed mirrors moving the laser fast enough to project a 2-dimensional (2-D) image such as the projection 900).

In some instances, the fiducial marker device 236 may be a DMD or an LCD projector. In some variations, the fiducial marker device 236 may be a low power laser mounted to two servo motors (or other actuator in a pan/tilt configuration) and configured to output a laser output that is projected onto the EV 210.

In some examples, the fiducial marker device 236 may project an ephemeral fiducial marker (e.g., a temporary fiducial marker) onto the EV 210. For instance, the control system 232 may direct the fiducial marker device 236 to project the fiducial marker at any time of the charging process. For example, in some instances, the control system 232 may project the fiducial marker at the beginning of the EV charging process (e.g., prior to initially maneuvering the robotic arm 228 and/or once the robotic arm 228 has begun to move). In other instances, the control system 232 may project the fiducial marker at some point during the EV charging process (e.g., prior to the image capturing device 234 being unable to capture an image indicating the EV charging portal 212 and/or in response to the image capturing device 234 being unable to capture an image indicating the EV charging portal 212).

For instance, the fiducial marker device 236 may initially project the fiducial marker at a first position. The image capturing device 234 may obtain one or more images (e.g., the one or more first images) showing a location of the fiducial marker as well as the location / orientation of the EV charging portal 212. The control system 232 may use the location / orientation of the EV charging portal 212 within the first images to maneuver the charging plug 230. Additionally, and/or alternatively, the control system 232 may change the position of the fiducial marker projected by the fiducial marker device 236 from the first position to one or more second positions. For instance, based on feedback from the first images, the control system 232 may change the position of the fiducial marker to a target position (e.g., a position where the image capturing device 234 ends up once the charging plug 230 obstructs the view of the EV charging portal 212). After reaching the target position, the control system 232 may use the projected fiducial marker for localization of the charging plug 230 / the robotic arm 228. In some instances, the control system 232 may use the location of the fiducial marker to maneuver the charging plug 230 / robotic arm 228 even though the images still show the location of the EV charging portal 212. For instance, based on the fiducial marker reaching the target position, the control system 232 may use the location of the fiducial marker for maneuvering even if the images (e.g., the one or more second images) still show the location of the EV charging portal 212.

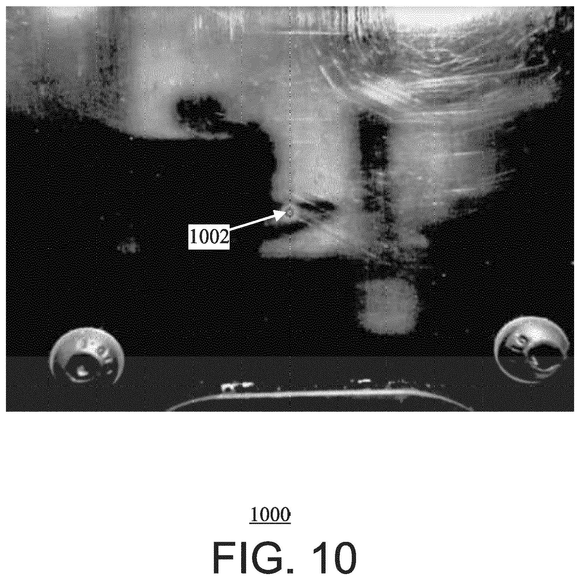

At block 508, the control system 232 captures one or more second images using the image capturing device 234. The one or more second images includes a multitude of pixels and the captured image indicates a position (e.g., (e.g., a location and/or orientation) of the fiducial marker. FIG. 10 depicts an image captured by the image capturing device showing a fiducial marker according to one or more examples of the present disclosure. For instance, FIG. 10 shows an image 1000 is similar to image 810 of FIG. 8B except that image 1000 shows a fiducial marker 1002. In other words, after projecting the fiducial marker, the image capturing device 234 may capture an image of the fiducial marker such as fiducial marker 1002.

At block 510, the control system 232 maneuvers the robotic arm 228 of the EV charging system 102 based on the one or more second images indicating the one or more fiducial markers (e.g., fiducial marker 1002). For instance, as mentioned above, the control system 232 may maneuver (e.g., move / orient) the robotic arm 228 and/or the charging plug 230 to a physical position such as by sending control signals to maneuver the robotic arm 228 / charging plug 230 such that it is insertable into the charging portal 212. The control signals may further include instructions to insert the charging plug 230 into the charging portal 212 and/or retract the robotic arm 228 / the charging plug 230 after charging the EV 210. For instance, the control system 232 may determine motor control signals, which are configured to operate the motors 418 to insert the charging plug 230 into the charging portal 212. The control system 232 then sends those further motor control signals to execute the specified movements. Subsequently, e.g., after charging is completed, the control system 232 determines and sends additional motor control signals, which when executed, cause the motors 418 to retract the robotic arm 228 to its fully retracted state.

In some examples, the positioning of the fiducial marker is a closed loop process. In other words, the control system 232 may use the images captured of the fiducial marker as feedback, and use the feedback to maneuver (e.g., position and/or orient) the robotic arm 228 and/or the charging plug 230 further. Additionally, and/or alternatively, the control system 232 may re-position the fiducial marker based on the images of the fiducial marker. For instance, while the charging portal 212 and the targeted fiducial marker position are within view (e.g., able to be obtained by the image capturing device 234), the image capturing device 234 may provide position feedback for the fiducial marker until the fiducial marker reaches the targeted position on the EV, at which the point, the position of the fiducial marker is maintained for the rest of the plug-in process. In some instances, the fiducial marker device 236 (e.g., the fiducial marker projector) is mounted on a stationary, or nearly stationary part of the robotic charging device 224 such that the projected location is consistent while the robot arm 228 finishes the connection to the EV charging portal 212.

In other words, the control system 232 may initially direct the fiducial marker device 236 to project a fiducial marker. The fiducial marker may be at a first position. The control system 232 may obtain one or more images of the fiducial marker from the image capturing device 234. The images may include the fiducial marker as well as the EV charging portal 212. The control system 232 may use the images as positional feedback for the fiducial marker, and re-direct the position of the fiducial marker. For instance, the control system 232 may direct the fiducial marker device 236 to change the position or location of the fiducial marker from a first position to one or more second positions. The control system 232 may continuously direct the fiducial marker device 236 to change the position of the fiducial marker until the control system 232 determines that the fiducial marker has reached a targeted position (e.g., a location that is detectable by the image capturing device 234 once the image capturing device 234 is unable to obtain an image of the EV charging portal 212). The control system 232 may maintain the position of the fiducial marker at the targeted location until the plug-in process is complete (e.g., after the insertion of the charging plug 230 into the EV charging portal 212).

In some variations, based on the fiducial marker being projected at the targeted location, the control system 232 may switch from localizing based on the EV charging portal 212 to localizing based on the projected fiducial marker (which is in view during the entire final connection motion). For instance, the fiducial marker device 236 may place a fiducial marker (e.g., a 6 DoF localization image such as the 6 DoF fiducial marker 900 shown in FIG. 9) or any other pattern, in the same location for increased precision. In other words, even prior to the charging plug 230 obstructing the EV charging portal 212 from the view of the image capturing device 234, the control system 232 may determine that the fiducial marker is at the targeted location (e.g. a final location that is detectable by the image capturing device 234 even when the charging plug 230 obstructs the EV charging portal 212 from the view of the image capturing device 234). Based on the determination, the control system 232 may switch from maneuvering the robotic arm using a location of the EV charging inlet 212 within the captured image to a location of the fiducial marker within the captured image. To put it another way, after determining that the fiducial marker is at the targeted location, the control system 232 may capture one or more images (e.g., second images) that include pixels indicating both the EV charging inlet 212 as well as the fiducial marker. The control system 232 may use the fiducial marker for localization (e.g., for maneuvering the robotic arm 228 / the charging plug 230) even though the pixels of the images still indicates the EV charging portal 212.

In some instances, the pattern (e.g., the fiducial marker) projected by the fiducial marker device 236 may also alternate. For instance, the fiducial marker device 236 may project multiple patterns or fiducial markers onto the EV 210. For example, the patterns / fiducial markers may alternate based on a given time interval if the patterns / fiducial markers adds information / value to the localization. In other words, the fiducial marker device 236 may project a larger pattern (e.g., fiducial marker) at first, followed by a smaller, more optimized pattern (e.g., fiducial marker) as the image capturing device 234 and/or the robotic arm 228 / the charging plug 230 approaches the EV 210.

In some examples, the present disclosure provides a method of closing a localization feedback loop for a perception system (e.g., an EV charging system 102) while an object or features (e.g., the EV charging portal 212) are obstructed or out of view of an image capturing device 234. For instance, an ephemeral fiducial marker may be used for localization. In some instances, the fiducial marker may be placed in an offset position relative to the original object / features (e.g., the EV charging portal 212), and may stay in view of the system's sensors (e.g., stay in view of the image capturing device 234). In some variations, the fiducial marker may maintain its position while the robotic arm 228 / the charging plug 230 is being maneuvered (e.g., approaches the EV 210). In some instances, the fiducial marker's relationship with the EV charging portal 212 is known (e.g., the control system 232 knows the offset between the fiducial marker and the EV charging portal 212). In some examples, the fiducial marker may be an arbitrary pattern such as a dot, line, or 6 DoF pattern. In some variations, the fiducial marker's pattern may change during the approach of the robotic arm 228 / the charging plug 230 towards the EV charging portal 212, which may allow for more precision in any or all dimensions.

While embodiments of the invention have been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below. For example, the various embodiments of the kinematic, control, electrical, mounting, and user interface subsystems can be used interchangeably without departing from the scope of the invention. Additionally, statements made herein characterizing the invention refer to an embodiment of the invention and not necessarily all embodiments.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A method for an electric vehicle (EV) charging system to autonomously charge an EV, comprising:
capturing, by a control system and using an image capturing device, one or more first images, wherein the one or more first images indicates a position of an EV charging portal of the EV;
maneuvering, by the control system, a robotic arm of the EV charging system based on the one or more first images;
projecting, by the control system and using a fiducial marker device, one or more fiducial markers that are offset from the EV charging portal;
capturing one or more second images using the image capturing device, wherein the one or more second images indicates a position of the one or more fiducial markers; and
maneuvering, by the control system, the robotic arm of the EV charging system based on the one or more second images.

2. The method of claim 1, wherein the one or more first images further indicates a first position of the one or more fiducial markers, and wherein the method further comprises:
directing, by the control system, the fiducial marker device to re-position the one or more fiducial markers from the first position to a second position based on the one or more first images, wherein the second position is the position indicated by the one or more second images.

3. The method of claim 2, wherein directing the fiducial marker device to re-position the one or more fiducial markers from the first position to the second position comprises:
directing, by the control system, the fiducial marker device to re-position the one or more fiducial markers from the first position to one or more intermediate positions based on the one or more first images; and
directing, by the control system, the fiducial marker device to re-position the one or more fiducial markers from the one or more intermediate positions to the second position based on the one or more first images.

4. The method of claim 2, further comprising:
determining that the one or more fiducial markers is at the second position, and
wherein maneuvering the robotic arm of the EV charging system based on the one or more second images is further based on determining that the one or more fiducial markers is at the second position.

5. The method of claim 4, wherein projecting the one or more fiducial markers comprises:
projecting a first fiducial marker prior to determining that the one or more fiducial markers is at the second position; and
projecting a second fiducial marker based on determining that the one or more fiducial markers is at the second position, wherein the first fiducial marker is different from the second fiducial marker.

6. The method of claim 4, wherein at least one of the one or more second images comprises pixels indicating at least part of the EV charging portal, and wherein maneuvering the robotic arm of the EV charging system based on the one or more second images comprises maneuvering the robotic arm of the EV charging system based on the position of the one or more fiducial markers indicated by the one or more second images.

7. The method of claim 1, wherein projecting the one or more fiducial markers comprises projecting a 6 degree of freedom (DoF) fiducial marker.

8. The method of claim 1, wherein projecting the one or more fiducial markers comprises projecting a dot at a target position.

9. An electric vehicle (EV) charging system for use in autonomously charging an EV, comprising:
a robotic arm that is controllably extendable and retractable, wherein the robotic arm is adapted to carry a charging plug located at a distal end of the robotic arm, wherein the charging plug is configured to be controllably moveable and insertable into an EV charging portal of the EV;
an image capturing device configured to capture one or more images;
a fiducial marker device configured to project one or more fiducial markers; and
a control system configured to:
capture, using the image capturing device, one or more first images, wherein the one or more first images indicates a position of the EV charging portal of the EV;
maneuver the robotic arm of the EV charging system based on the one or more first images;
project, using the fiducial marker device, the one or more fiducial markers that are offset from the EV charging portal;
capture one or more second images using the image capturing device, wherein the one or more second images indicates a position of the one or more fiducial markers; and
maneuver the robotic arm of the EV charging system based on the one or more second images.

10. The EV charging system of claim 9, wherein the one or more first images further indicates a first position of the one or more fiducial markers, and wherein the control system is further configured to:
direct the fiducial marker device to re-position the one or more fiducial markers from the first position to a second position based on the one or more first images, wherein the second position is the position indicated by the one or more second images.

11. The EV charging system of claim 10, wherein directing the fiducial marker device to re-position the one or more fiducial markers from the first position to the second position comprises:
directing the fiducial marker device to re-position the one or more fiducial markers from the first position to one or more intermediate positions based on the one or more first images; and
directing the fiducial marker device to re-position the one or more fiducial markers from the one or more intermediate positions to the second position based on the one or more first images.

12. The EV charging system of claim 10, wherein the control system is further configured to:
determine that the one or more fiducial markers is at the second position, and
wherein maneuvering the robotic arm of the EV charging system based on the one or more second images is further based on determining that the one or more fiducial markers is at the second position.

13. The EV charging system of claim 11, wherein projecting the one or more fiducial markers comprises:
projecting a first fiducial marker prior to determining that the one or more fiducial markers is at the second position; and
projecting a second fiducial marker based on determining that the one or more fiducial markers is at the second position, wherein the first fiducial marker is different from the second fiducial marker.

14. The EV charging system of claim 11, wherein at least one of the one or more second images comprises pixels indicating at least part of the EV charging portal, and wherein maneuvering the robotic arm of the EV charging system based on the one or more second images comprises maneuvering the robotic arm of the EV charging system based on the position of the one or more fiducial markers indicated by the one or more second images.

15. The method of claim 9, wherein the fiducial marker device comprises a laser coupled with a galvanometer.

16. The method of claim 9, wherein the fiducial marker device comprises a digital micro-mirror device (DMD) or a liquid crystal display projector.

17. The method of claim 9, wherein the fiducial marker device comprises a laser coupled to a plurality of servo motors.

18. A non-transitory computer-readable medium having processor-executable instructions stored thereon, wherein the processor-executable instructions, when executed by one or more controllers, facilitate:
capturing, using an image capturing device, one or more first images, wherein the one or more first images indicates a position of an EV charging portal of the EV;
maneuvering a robotic arm of the EV charging system based on the one or more first images;
projecting, using a fiducial marker device, one or more fiducial markers that are offset from the EV charging portal;
capturing one or more second images using the image capturing device, wherein the one or more second images indicates a position of the one or more fiducial markers; and
maneuvering the robotic arm of the EV charging system based on the one or more second images.
